Europäisches Patentamt

European Patent Office

Office européen des brevets

(19)

(11) Veröffentlichungsnummer: **0 222 716 B1**

## (12) EUROPÄISCHE PATENTSCHRIFT

(45) Veröffentlichungstag der Patentschrift:
03.04.91 Patentblatt 91/14

(51) Int. Cl.⁵: **B23K 9/28**

(21) Anmeldenummer: **86850292.3**

(22) Anmeldetag: **08.09.86**

(54) **Einrichtung für das Schweissen von Rohren in Wände, insbesondere in Rohrböden.**

(30) Priorität: **11.09.85 SE 8504202**

(43) Veröffentlichungstag der Anmeldung:
**20.05.87 Patentblatt 87/21**

(45) Bekanntmachung des Hinweises auf die
Patenterteilung:
**03.04.91 Patentblatt 91/14**

(84) Benannte Vertragsstaaten:
**AT BE CH DE FR GB IT LI NL**

(56) Entgegenhaltungen:
**AT-B- 366 612**
**DE-B- 1 134 464**

(73) Patentinhaber: **ESAB Aktiebolag**
**Box 8004 Herkulesgatan 72**
**S-402 77 Göteborg (SE)**

(72) Erfinder: **Puls, Jürgen**
**Radjursstigen 14**
**S-695 00 Laxa (SE)**

(74) Vertreter: **Frisch, Kurt**
**c/o ESAB AB Box 8004**
**S-402 77 Göteborg (SE)**

## Beschreibung

Die Erfindung bezieht sich auf ein Schweißgerät für das Schweißen von Rohren in Wände, insbesondere in Rohrböden, mit einem feststehenden Gehäuse, in dem ein um die Längsachse des Schweißgerätes drehbarer, dem Gehäuse entnehmbarer Einsatz angebracht ist, an dessen zur Schweißstelle zu richtendem Ende ein Elektrodenhalter für eine längs einer im wesentlichen kreisförmigen Bahn bewegbare Elektrode montiert ist, wobei das Schweißgerät mit direkt an dem von der Schweißstelle abgewandten Ende des drehbaren Einsatzes fest angeschlossenen Leitungen an eine Regel- und Versorgungseinrichtung anschließbar ist, und die Leitungen für die Zufuhr von Steuersignalen für die Drehung des Einsatzes im Gehäuse und die Zufuhr von Arbeitsmedien dienen.

Durch die DE-B-1 134 464 ist ein Schweißgerät bekannt geworden, das einen Einsatz besitzt, der dem Gehäuse entnommen werden kann und an den Versorgungsleitungen für die Zufuhr von Arbeitsmedien von einer Steuereinrichtung an die Schweißelektrode angeschlossen sind. Die Bewegung des Einsatzes relativ zum Gehäuse und Schweißstelle wird durch eine exzentrische Lage der Einsatzachse bestimmt. Die radiale Einstellung der Elektrode wird zudem durch eine zusätzliche exzentrische Anordnung erreicht. Dieses Schweißgerät erfordert einen äußeren stationären Antrieb, der mit dem Gehäuse in Verbindung steht. Dies geschieht durch eine biegsame Welle, die die Drehung eines in der Steuereinrichtung angebrachten Motors auf den Einsatz überträgt.

Es ist wünschenswert, daß sich Anfang und Ende der kreisförmigen Schweißnaht mit einer gewissen Bogenstücklänge überlappen. Dies erfordert eine genaue Einstellungsmöglichkeit des Drehwinkels des drehbaren Einsatzes. Dies läßt sich mit biegsamen Wellen nicht erreichen, da sich der Verdrehungswinkel innerhalb der Welle nicht überwachen läßt und durch Lageänderungen der Welle dauernd Veränderungen unterworfen ist

Aufgabe der Erfindung ist es, den Antrieb durch eine biegsame Welle zu vermeiden und ein Schweißgerät zu schaffen, bei dem alle Elemente des Einsatzes zwecks Kontrolle und eventuellem Austausch leicht zugänglich sind. Die vorliegende Erfindung besteht darin, daß der Einsatz mit einem mittels Walzlager vom Gehäuse getragenen, käfigartigen Gestell versehen ist, das zwei axial hintereinander angeordnete Befestigungselemente besitzt, die durch axial angebrachte Stangen fest miteinander verbunden sind und ein Antriebsmotor für die Drehung des Einsatzes im Gestell fest montiert ist.

Eine vorteilhafte Ausführungsform der Erfindung zeichnet sich dadurch aus, daß ein Arm an einem der Befestigungselemente schwenkbar montiert ist und sich in Richtung zur Schweißstelle erstreckt und daß der Elektrodenhalter an dem zur Schweißstelle zugewandten Ende des Arms befestigt ist, wobei die Schwenkung des Arms eine radiale Einstellung des Elektrodenabstands zwischen der Längsachse des Schweißgerätes und der Electrodenspitze zur Anpassung an den Durchmesser des zu verschweißenden Rohres erlaubt. Mit dem Schweißgerät gemäß der Erfindung können Rohre innerhalb eines großen Durchmesserbereiches verschweißt werden.

Gemäß einer weiteren vorteilhaften Ausführungsform der Erfindung ist ein Vorschubgerät für die Zufuhr von einem Schweißdraht zur Schweißstelle mit dem Einsatz fest verbunden und im Einsatz ist ein zusätzlicher Antriebsmotor für das Vorschubgerät befestigt.

Durch den zusätzlichen Anbau des Vorschubgerätes an den Einsatz, der auch den zugehörigen Antriebsmotor enthält, enthält man eine kompakte aber auch leicht zu wartende Einheit. Das Schweißgerät enthält alle für den Betrieb erforderlichen, mechanischen Bauelemente. Lediglich die Zufuhr der Arbeitsmedien und Steuersignale erfolgt durch die mit dem Einsatz fest verbundenen Leitungen.

Weitere Vorteile der Erfindung gehen aus der nachfolgenden Beschreibung eines Ausführungsbeispiels der Erfindung im Zusammenhang mit der beigefügten Zeichnung hervor.

Fig. 1 ist eine übersichtliche Darstellung einer Schweißeinrichtung gemäß der Erfindung.

Fig. 2 zeigt ein Schweißgerät dieser Einrichtung in Betriebsstellung beim Schweißen von Rohren in Rohrböden, wobei einzelne Teile des Schweißgeräts entfernt und andere Teile im Schnitt dargestellt sind.

Fig. 3 zeigt einen Längsschnitt durch das Schweißgerät.

Fig. 4 ist eine Seitenansicht mit teilweise aufgebrochenem Gehäuse.

Fig. 5 ist ein Querschnitt durch das Schweißgerät längs V-V in Fig. 3.

Fig. 6 ist eine abgeänderte Ausführung eines Abstandsorgans des Schweißgeräts.

Fig. 7 zeigt das käfigartige Gestell des Schweißgeräts.

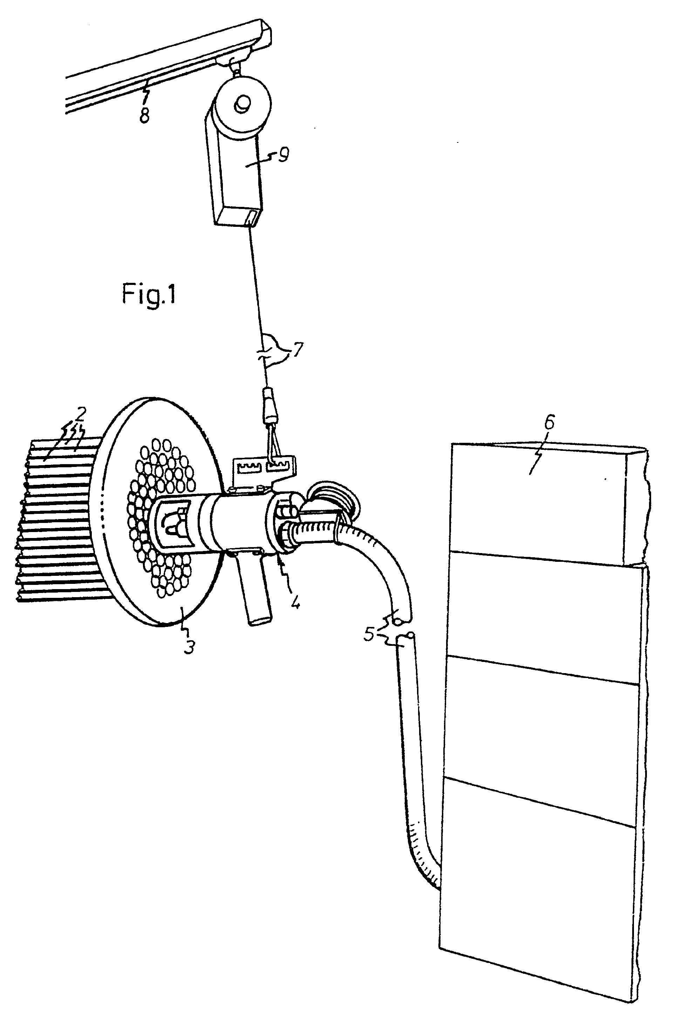

In Fig. 1 wird übersichtlich gezeigt, wie eine allgemein mit 1 bezeichnete Schweißeinrichtung gemäß der Erfindung bei der Schweißung von Rohren 2 in eine Wand 3, die z.B. ein Rohrboden sein kann, zur Anwendung kommt. Die Schweißeinrichtung 1 bezitzt ein Schweißgerät 4, das mittels in einem Schlauch 5 verlegter Leitungen an eine Steuer- und Versorgungseinrichtung 6 für die Abgabe von Steuersignalen und die Zufuhr von elektrischer Energie, Schutzgas, und gegebenenfalls Schweißdraht und Kühlmittel zum Schweißgerät angeschlossen ist. Das Schweißgerät 4 ist mit einem Drahtseil 7 auf einem schwenkbaren Arm 8 zur Arbeitserleichterung der Arbeit für den Schweißer aufgehängt. Das Drahtseil 7 hängt von einer Winde 9 herab, mit der die Arbeitshöhe des Schweißgerätes 4 eingestellt wird.

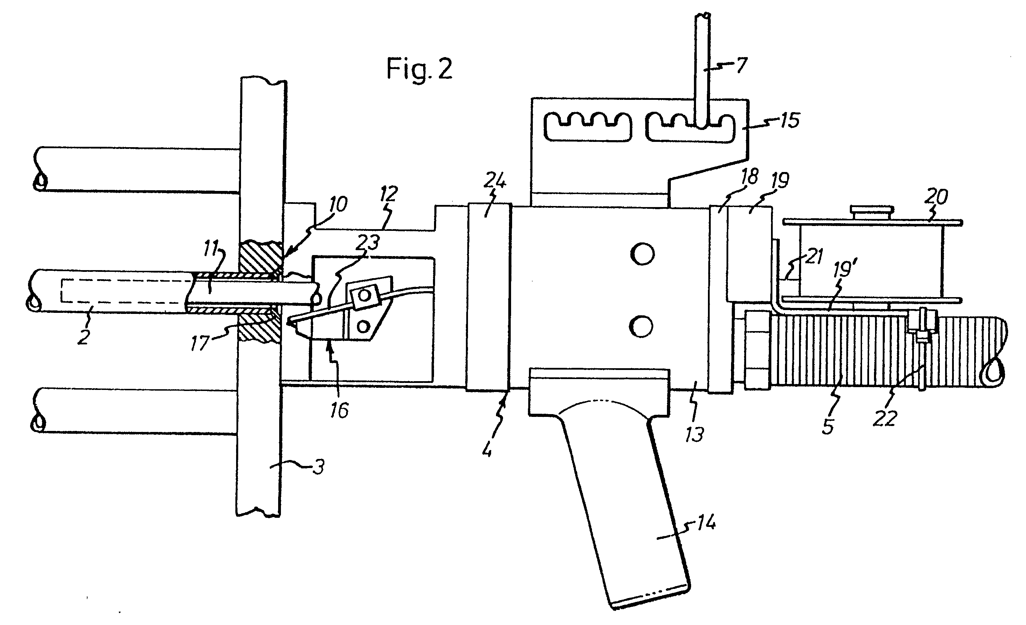

In Fig. 2 ist die Schweißung des Rohres 2 in die Wand 3 näher dargestellt. Bei der Schweißstelle 10 wird das Rohr 2 und die Wand 3 im Schnitt gezeigt. Während der Schweißung wird ein aus dem Schweißgerät 4 vorstehendes Zentrierungsorgan 11 in das Rohr 2 eingeführt, bis daß ein an dem zur Wand zugewandten Ende des Schweißgerätes 4 angebrachtes Abstandsorgan 12 an der Wand 3 anliegt. Das Schweißgerät 4 umfaßt ein feststehendes Gehäuse 13, das mit einem Handgriff 14 und einer Aufhängeöse 15 für das Drahtseil 7 versehen ist. Teile des Abstandsorganes 12 sind weggebrochen, um die Elektrodeneinheit 16 sichtbar zu machen, die an einen um die Längsachse des Schweißgerätes 4 drehbaren Einsatz, der später beschrieben wird, befestigt ist. Die Elektrodeneinheit 16 wird beim Schweißen in einer Kreisbahn um das Zentrierungsorgan 11 geführt, wobei eine ringförmige Schweißnaht 17 erzeugt wird, die das Ende des Rohres 2 mit der Wand 3 verbindet.

An seinem hinteren Ende ist das Schweißgerät 4 mit einer Abschlußplatte 18 versehen, an die der Leitungsschlauch 5 angeschlossen ist. Ein Drahtvorschubwerk 19 trägt mittels einer am Drahtvorschubwek angebrachten Konsole 19' eine Spule 20, auf der Schweißdraht 21 aufgespult ist. Am freien Ende der Konsole ist der Leitungsschlauch 5 mit Hilfe einer Klammer 22 befestigt. Während des Schweißbetriebes wird der Schweißdraht 21 vom Vorschubwerk 19 durch ein Führungsrohr 23 durch das Schweißgerät 4 bis in die Nähe der Spitze 43 einer Elektrode 30 der Elektrodeneinheit 15 geführt.

Die Abschlußplatte 18 ist mit dem vom Gehäuse 13 umschlossenen und nachstehend beschriebenen Einsatz fest verbunden und rotiert während des Schweißvorganges. Das Drahtvorschubwerk 19 und der Leitungsschlauch 5 machen in gleicher Weise diese Drehbewegung mit. Das Abstandsorgan 12 ist auf noch zu beschreibende Weise bezüglich des Gehäuses 13 für die Einstellung der Lichtbogenlänge axial einstellbar. Nach durchgeführter Einstellung wird das Abstandsorgan 12 mit einem als Gegenmutter dienenden Sperring 24 fixiert.

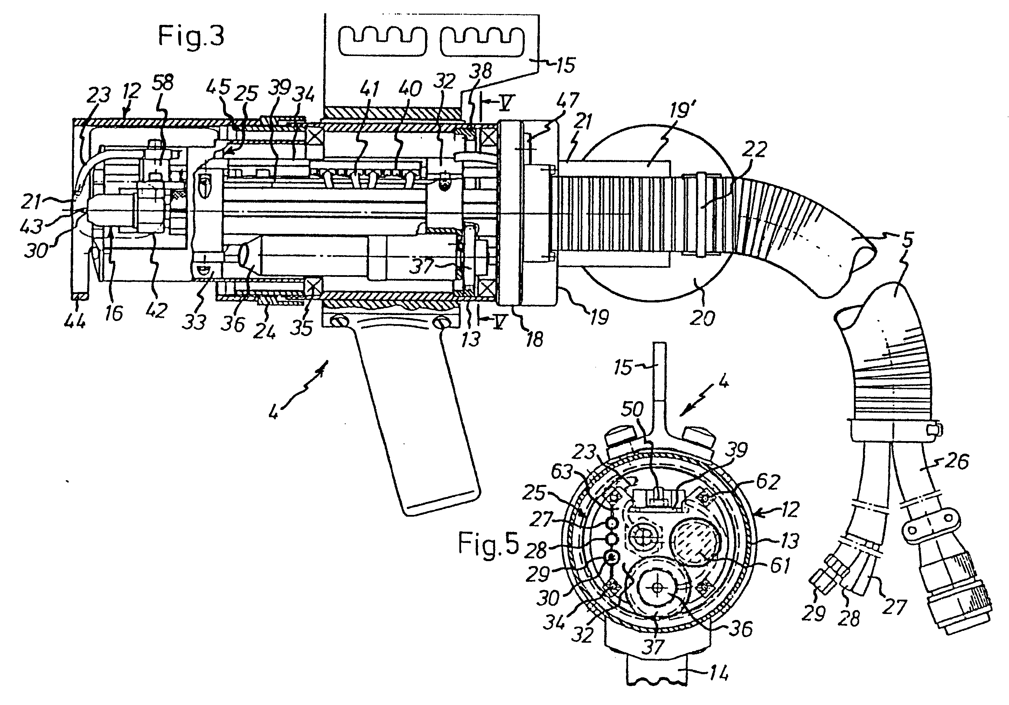

In Fig. 3 ist das Schweißgerät 4 im Längsschnitt dargestellt, wobei das Zentrierungsorgan 11 entfernt ist. Der an die drehbare Abschlußplatte 18 angeschlossene Leitungsschlauch 5 enthält Leitungen, die an den um die Längsachse des Schweißgerätes drehbaren Einsatz angeschlossen sind, der hier allgemein mit dem Bezugszeichen 25 bezeichnet ist. Die Leitungen umfassen eine Speiseleitung 26 für die Stromversorgung der im Einsatz angeordneten und weiter unten beschriebenen Antriebe für die Drehung und den Drahtvorschub und Leitungen für Arbeitsmedien, nämlich ein Kühlwasserleitung 27, eine Schutzgasleitung 28 und eine Schweißstromleitung 29, die an die Elektrode 30 angeschlossen ist. Die Schweißstromleitung 29 dient auch als Rückleitung für das Kühlwasser, wie sich am besten der Fig. 5 entnehmen läßt. Das Kühlrückwasser strömt längs dem Stromleiter, der dadurch effektiv gekühlt wird. Die Elektrodeneinheit 16 wird auf bekannte Weise mittels Kühlwasser gekühlt, das durch hier nicht gezeigte Kühlkanäle strömt. Sämtliche Leitungen sind an die regel- und Vorsorgungseinrichtung 6 angeschlossen.

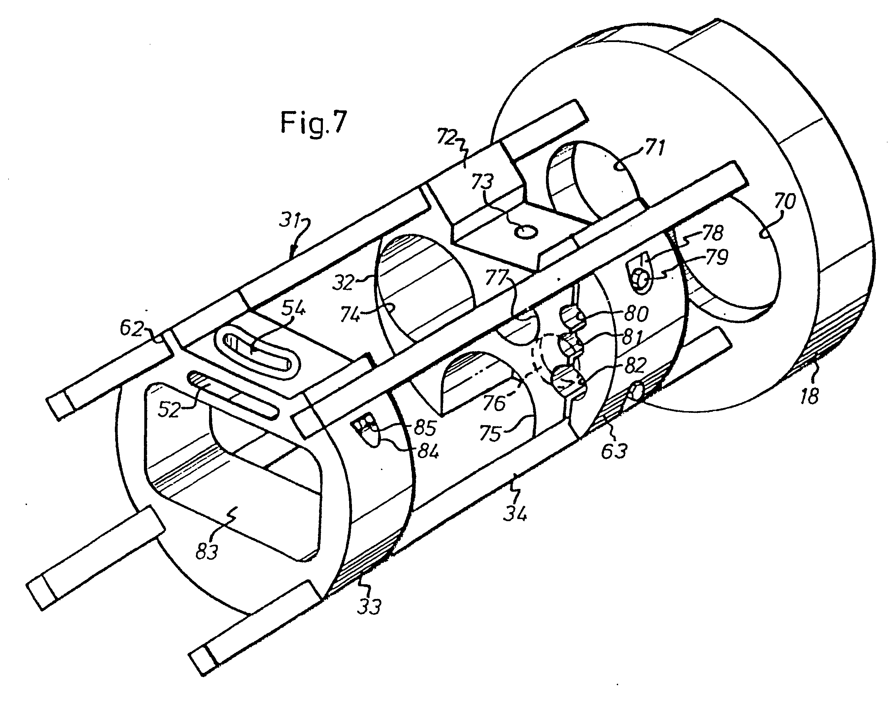

Der Einsatz 25 besitzt ein käfigartiges Gestell 31, das aus einem hinteren Befestigungselement 32 und einem im Abstand von diesem angebrachten vorderen Befestigungselement 33 besteht. Die beiden Elemente 32, 33 sind miteinander mittels vier in axialer Richtung angeordneten Stangen 34 verbunden, wie dies am besten aus Fig. 7 hervorgeht. Die Stangen 34 sind mit ihrem hinteren Ende mit der Abschlußplatte 18 in Verbindung, so daß das Gestell mit der Abschlußplatte 18 eine drehfeste Einheit bildet, die im Gehäuse 13 mittels Kugellager 35 gelagert ist.

Parallel zu den Stangen 34 ist ein Gleichstrommotor 36 am hinteren Befestigungselement 32 befestigt. Der Motor 36 ist mit einem Ritzel 37 versehen, das in einen Zahninnenkranz 38 eingreift, der im Gehäuse angebracht ist. Wenn der Motor mittels der Speiseleitung an das Netz angeschlossen ist, dreht sich das Ritzel 37 und zufolge des Eingriffes zwischen Ritzel 37 und Zahninnenkranz 38 der ganze Einsatz 25. Weiters umfaßt der Einsatz 25 einen schwenkbaren Arm in Form einer Leiterplatte 39, die auf dem hinteren Befestigungselement 32 angebracht ist. Die Leiterplatte 32 hat auf ihrer Oberseite Anschlüsse 40, an die die Steuerleitungen 41 des Motors 36 angeschlossen sind. Am vorderen Ende der Leiterplatte 39 ist ein Arm 49 befestigt, an dem ein Halter 42 befestigt ist. Durch das Schwenken der Leiterplatte 39 wird die Elektrode 30 radial verstellt, wodurch der Abstand zwischen der Längsachse des Schweißgerätes und der Spitze 43 der Elektrode 30 eingestellt wird. Dieser Abstand ist im Hinblick auf den aktuellen Rohrdurchmesser entsprechend einzustellen.

Das oben genannte Abstandsorgan 12 besteht aus einem Rohrstutzen 44, der mit Öffnungen versehen ist, um den Blick auf die Schweißstelle freizugeben. Beim Schweißen setzt der Schweißer den Rohrstutzen 44 an die Wand an, so daß dieser ringförmig um die Schweißstelle anliegt. Der Rohrstutzen 44 dient auch zur Einstellung der Lichtbogenlänge, d.h. des axialen Abstands zwischen Schweißstelle 10 und Elektrodenspitze 43. Zu diesem Zweck besitzt der Rohrstutzen ein Innengewinde 45, das mit einem Außengewinde 46 am Gehäuse 13 des Schweißgerätes 4 zusammenwirkt. Für die Einstellung der Lichtbogenlänge ist lediglich der Rohrstutzen 44 auf einer bestimmten Länge mit dem Gehäuse 13 zu verschrauben. Sobald die Einstellung durchgeführt ist, wird der mit Innengewinde versehene als Gegenmutter dienende Sperring 24 an das hintere Ende des Rohrstutzens 44 geschraubt.

Beim Schweißen wird der auf der Spule 20 aufgespulte Schweißdraht 21 durch das Führungsrohr 23 des Schweißgerätes 4 zur Elektrodenspitze 43 vorgeschoben, wie dies bereits beschrieben wurde. Für gewisse Schweißarbeiten ist ein Schweißdraht nicht erforderlich und das Drahtvorschubwerk kann dann entfallen.

Um den Schweißbetrieb zu starten, drückt der Schweißer auf einen Druckknopf 47, worauf der Einsatz 25 und damit die Elektrodeneinheit 16 während des Schweißens zumindest eine volle Umdrehung ausführt und danach durch die Regeleinrichtung automatisch zur Ausgangsposition zurückgedreht werden. Das Schweißgerät ist sehr einfach zu betätigen. Der Kraftaufwand für den Schweißer beschränkt sich auf ein leichtes Andrücken des in passender Höhe aufgehängten Schweißgerätes 4 an die Wand 3.

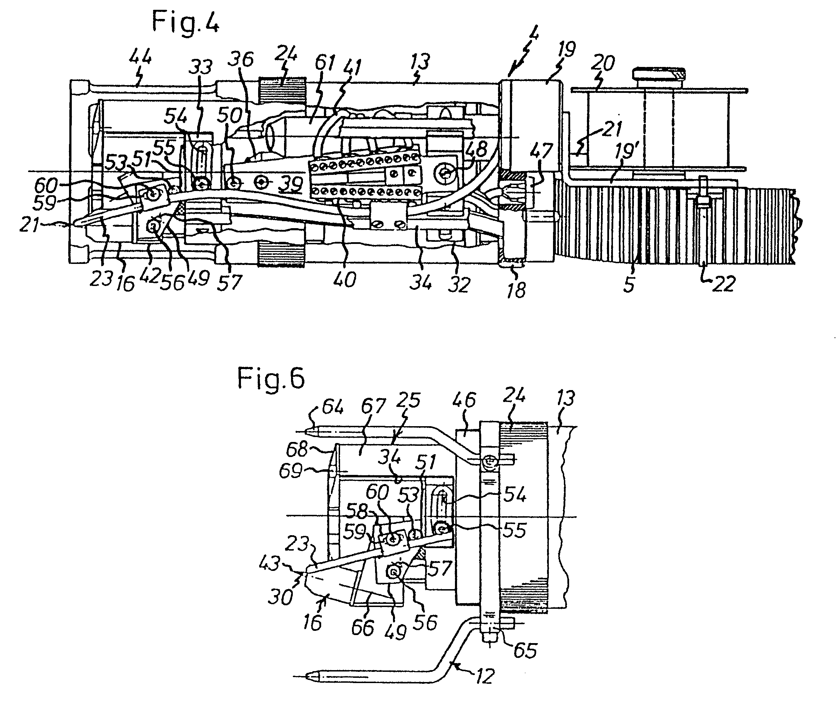

In Fig. 4 ist der Aufbau des Einsatzes 25 dargestellt. Die längliche Leiterplatte 39 ist mit einer Schraube 48 am hinteren Befestigungselement 32 befestigt. Am Vorderende der Leiterplatte 39 ist der Arm 49 mit Schrauben 50 befestigt. Eine Zahnstange 51 ist in eine Ausnehmung 52 des vorderen Befestigungselementes 33 eingesetzt (siehe Fig. 7). Eine Stellschraube 53, die mit einem Ritzel versehen ist, ist in den Arm 49 eingeschraubt und das Ritzel ist mit der Zahnstange 51 im Eingriff. Wünscht man eine radiale Einstellung der Elektrodeneinheit 16, dreht man die Stellschraube 53. wodurch der Arm 49 und die mit diesem fest verbundene Leiterplatte 39 in radialer Richtung verschoben werden. Nach abgeschlossener Einstellung wird der Arm 49 mit einer in einem oberen Schlitz 54 im vorderen Befestigungselement 33 angebrachten Spannschraube 55 fixiert. Ebenso ist die Elektrodeneinheit 16 mit einer Schraube 56 einstellbar, die den Halter 42 mit dem Arm 49 verbindet. Der Halter ist in einem im Arm 49 ausgenommenen Schlitz 57 verschiebbar. Das Vorderende des Führungsrohres 23 ist mit Hilfe eines Elements 58 einstellbar, das am Arm mit einer in einem Schlitz 59 angebrachten Spannschraube 60 befestigt ist. Das Führungsrohr 23 kann somit verschoben werden, um die gewünschte Vorschubrichtung des Schweißdrahtes 21 bezüglich der Schweißstelle sicherzustellen.

In Fig. 4 ist ein weiterer Gleichstrommotor 61 gezeigt, der achsenparallel zu den Stangen 34 des Gestells 31 angebracht ist. Der Motor 61 treibt das Drahtvorschubwerk 19 für den Schweißdraht 21. Der Motor 61 wird genauso wie der Motor 36 von einem Steuerkreis gesteuert, der durch die Speiseleitung 26 versorgt wird.

In dem in Fig. 5 gezeigten Querschnitt ist die gegenseitige Anordnung der oben beschriebenen Teile gezeigt. Die Stangen 34 sind in diametral angebrachten Nuten 62 mit dem hinteren Befestigungselement 32 verbunden, das mit einem lösbaren Teil 63 versehen ist, mit dem die Leitungen 27, 28, 29 im Befestigungselement 32 eingespannt werden kann. Es ist zu beachten, daß sich der gesamte Einsatz 25 mit den zugehörigen Komponenten während des Schweißvorganges dreht, während das Gehäuse 13 mit dem Handgriff 14 und der Aufhängeöse 15 still steht.

In Fig. 6 wird eine Variante des Abstandsorganes 12 gezeigt, das drei Stützfinger 64 bezitzt, vom denen jedoch nur zwei dargestellt sind. Die Stützfinger 64 sind mit ihren hinteren Enden in einem mit Innengewinde versehenen Ring 65 befestigt, der mit einem Außengewinde 46 des Gehäuses 13 in gleicher Weise zusammenwirkt, wie beim vorher beschriebenen Rohrstutzen 44. Die axiale Einstellung der Lichtbogenlänge geschieht in analoger Weise, wobei die endgültige Fixierung mit dem Sperring 24 erfolgt. Die Stützfinger 64 kommen zur Anwendung, wenn das Rohr 2 ein Stück auf der Wand 3 hervorsteht und der oben beschriebene Rohrstutzen 44 nicht verwendet werden kann.

Weiters wird in Fig. 6 eine andere Form eines Halters 66 für die Elektrodeneinheit 16 gezeigt. Der Halter 66 gibt der Elektrodeneinheit 16 und damit der Elektrode eine andere Richtung, was insbesondere für das Schweißen einer äußeren Kehlfuge vorteilhaft ist.

In Fig. 6 wird auch das Vorderteil 67 des Einsatzes 25 gezeigt. Das Vorderteil hat eine Öffnung, um der Elektrodeneinheit 16, dem Arm 49 usw. Platz zu bereiten. Eine Stützplatte 68 ist mit Schrauben 69 an dem Vorderteil 67 befestigt. Die Schrauben 69 sind in die Enden der Stangen 34 eingeschraubt. Um für den Arm 49, Halter 42 usw. Platz zu bereiten, reicht eine der Stangen 34 nur bis zum vorderen Befestigungselement 33 (siehe Fig. 3).

In Fig. 7 wird das käfigartige Gestell 31 des Einsatzes 25 gezeigt, das aus der Abschlußplatte 18, den Befestigungselementen 32, 33 und den vier axialen Stangen 34 besteht. Die Abschlußplatte 18 besitzt zwei Bohrungen 70, 71 für die Durchführung der im Leitungsschlauch 5 verlegten Leitungen 26, 27, 28, 29 und den Schweißdraht 21 in den Einsatz.

Das Befestigungselement 32 besitzt eine obere Ausnehmung 72 für die Aufnahme der Leiterplatte 39. Die Ausnehmung hat ein Gewindeloch 73 für eine Schraube zum Befestigen der Leiterplatte. Weiters ist eine Bohrung 74 für den Motor 61 des Drahtvorschubwerkes 19 vorgesehen, während für den Motor 36 eine untere Ausnehmung 75 mit einer anschließenden Bohrung 76 vorgesehen ist. Außerdem ist eine Bohrung 77 für die elektrischen Leitungen vorgesehen, die an die Leiterplatte 39 angeschlossen werden. Das lösbare Teil 63 ist mit dem übrigen Teil des Befestigungselementes 32 und mit zwei Stangen 34 mit in Versenkungen 78 angebrachten Schrauben 79 befestigt. Die Schrauben 79 sind von außen durch entsprechend angebrachte Öffnungen im Gehäuse 13 zugänglich (siehe Fig. 2). Weiters ist das Teil 63 mit halbkreisförmigen Nuten 80, 81, 82 für die Leitungen 27, 28, 29 versehen, die durch entsprechende Nuten im übrigen Befestigungselement 32 zu Bohrungen ergänzt sind. Die Leitungen können somit im Befestigungselement mit Hilfe des Teils 63 eingespannt und gelöst werden. Das vordere Befestigungselement 33 hat eine Öffnung 83, in der der Arm 49 bewegbar ist. Außer der bereits oben beschriebenen Ausnehmung 52 und dem oberen Schlitz 54 besitzt das vordere Befestigungselement 33 Versenkungen 84, in denen Schrauben 85 für die Befestigung der Stangen 34 angeordnet sind.

Der wesentliche Vorteil der Schweißeinrichtung 1 gemäß der Erfindung liegt darin, daß der Einsatz des Schweißgerätes 4 zur Gänze aus dem Gehäuse entnommen werden kann, wodurch der Unterhalt, der Austausch von Komponenten usw. wesentlich erleichtert wird. Vor der Entnahme wird das Abstandsorgan 12 abgeschraubt, danach die Schrauben 69 (siehe Fig. 6) gelöst und das Vorderteil 67 entfernt. Danach läßt sich der Einsatz 25 leicht nach hinten aus dem Gehäuse 13 ziehen. Diese Demontage ist somit sehr einfach durchzuführen.

Ein anderer bedeutender Vorteil der Erfindung liegt darin, daß sämtliche von der Regel- und Versorgungseinrichtung 6 kommenden Leitungen 26, 27, 28, 29 direkt an den drehbaren Einsatz 25 angeschlossen sind, wodurch man die Dichtungsprobleme vermeidet, die bei bekannten Schweißeinrichtungen dieser Art komplizierte konstruktive Lösungen erfordern. In dem dargestellten Ausführungsbeispiel sind die Leitungen 26, 27, 28, 29 durch die drehbare Abschlußplatte 18 geführt, die außerhalb des Gehäuses 13 angebracht ist. Es ist selbstverständlich auch denkbar eine anders gestaltete Abschlußplatte zu verwenden, die beispielsweise innerhalb des Schweißgerätes 4 angebracht ist.

Die Schweißeinrichtung 1 ist hervorragend für verschiedene Schweißoperationen geeignet, z.B. für die Schweißung von inneren Kehlfugen, wenn das Rohrende sich etwas innerhalb der Wand befindet (siehe Fig. 2), von äußeren Kehlfugen, wenn das Rohrende etwas aus der Wand herausragt, samt Stumpffugen, wenn das Rohrende mit der Wand in einer Ebene liegt. Die Elektrodeneinheit 16 wird so eingestellt, wie es für die aktuelle Schweißoperation zweckmäßig ist

Gemäß dem hier beschriebenen Ausführungbeispiel bezitzt das Schweißgerät 4 ein Drahtvorschubwek 19. Beim Schweißen ohne Zusatzdraht ist das Vorschubwerk überflüssig. Deshalb sind das Vorschubwerk 19 und das Führungsrohr 23 für den Schweißdraht 21 demontierbar und können beispielsweise getrennt geliefert werden.

Wenn auch der Einsatz 25 während der Schweißarbeiten normalerweise nur eine Umdrehung ausführt, sollten der Leitungsschlauch 5 und damit die darin verlegten Leitungen 26, 27, 28, 29 genügend lang sein um ein Verdrillen zu vermeiden. Die Leitungen zwischen dem Schweißgerät 4 und der Regel- und Versorgungseinrichtung 6 sollten etwa 3-10 m lang sein, können aber auch beträchtlich länger sein.

Schließlich ist noch zu erwähnen, daß sich die Schweißeinrichtung auch sehr gut für Innenschweißung geeignet ist. Das Schweißgerät wird zu diesem Zweck mit einem Zusatz versehen, der in das zu verschweißende Rohr eingeführt und dann um seine Längsachse gedreht wird, um die innere Schweißnaht im Rohrinnern herzustellen.

## Ansprüche

1. Schweißgerät für das Schweißen von Rohren (2) in Wände, insbesondere in Rohrböden, mit einem feststehenden Gehäuse (13), in dem ein um die Längsachse des Schweißgerätes (4) drehbarer, dem Gehäuse entnehmbarer Einsatz (25) angebracht ist, an dessen zur Schweißstelle zu richtendem Ende ein Elektrodenhalter (42, 66) für eine längs einer im wesentlichen kreisförmigen Bahn bewegbare Elektrode (30) montiert ist, wobei das Schweißgerät mit direkt an dem von der Schweißstelle abgewandten Ende des drehbaren Einsatzes fest angeschlossenen Leitungen (26-29) an eine Regel- und Versorgungseinrichtung (6) anschließbar ist, und die Leitungen für die Zufuhr von Steuersignalen für die Drehung des Einsatzes (25) im Gehäuse (13) und die Zufuhr von Arbeitsmedien dienen, dadurch gekennzeichnet, daß der Einsatz (25) mit einem mittels Wälzlager (35) vom Gehäuse (13) getragenen, käfigartigen Gestell (31) versehen ist, das zwei axial hintereinander angeordnete Befestigungselemente (32, 33) besitzt, die durch axial angebrachte Stangen (34) fest miteinander verbunden sind und ein Antriebsmotor (36) für die Drehung des Einsatzes im Gestell fest montiert ist

2. Schweißgerät nach Patentanspruch 1, dadurch gekennzeichnet, daß der Antriebsmotor(36) mit einem Ritzel (37) versehen ist, das in einen im Gehäuse (13) angebrachten Zahninnenkranz (38) eingreift.

3. Schweißgerät nach Patentanspruch 1 oder 2, dadurch gekennzeichnet, daß ein Arm (39, 49) schwenkbar an einem der Befestigungselemente (32) montiert ist und sich in Richtung zur Schweißstelle (10) erstreckt und daß der Elektrodenhalter (42) an dem der Schweißstelle zugewandten Ende des Arms (39, 49) befestigt ist, wobei die Schwenkung des Arms eine radiale Einstellung des Elektrodenabstandes zwischen der Längsachse des Schweißgerätes (4) und der Elektrodenspitze (43) zur Anpassung an den Durchmesser des zu verschweißenden Rohres erlaubt.

4. Schweißgerät nach einem der Patentansprüche 1-3, dadurch gekennzeichnet, daß ein Vorschubgerät (19) für die Zufuhr von einem Schweißdraht (21) zur Schweißstelle (10) mit dem Einsatz (25) fest verbunden ist und im Einsatz (25) ein zusätzlicher Antriebsmotor (61) für das Vorschubgerät (19) befestigt ist.

5. Schweißgerät nach Patentanspruch 4, dadurch gekennzeichnet, daß das Vorschubgerät (19) eine Spule (20) für den Schweißdraht (21) trägt.

## Claims

1. Welding apparatus for the welding of tubes (2) into walls, in particular into tube plates, having a fixed housing (13) in which an insert (25), rotatable about the longitudinal axis of the welding apparatus (4) and removable from the housing, is attached, on the end of which insert (25), which end is to be directed towards the welding location, an electrode holder (42, 66) for an electrode (30) movable along an essentially circular path is mounted, the welding apparatus, with lines (26-29) firmly attached directly to the end of the rotatable insert remote from the welding location, being attachable to a control and supply means (6), and the lines serving to feed control signals for the rotation of the insert (25) in the housing (13) and to feed working media, characterized in that the insert (25) is provided with a cage-like frame (31) which is carried by the housing (13) by means of anti-friction bearings (35) and has two fastening elements (32, 33) which are arranged axially one behind the other and are firmly connected to one another by axially attached bars (34), and a drive motor (36) is mounted in a fixed position in the frame for the rotation of the insert.

2. Welding apparatus according to Claim 1, characterized in that the drive motor (36) is provided with a pinion (37) which meshes with an internally toothed gear rim (38) attached in the housing (13).

3. Welding apparatus according to Claim 1 or 2, characterized in that an arm (39, 49) is pivotably mounted on one of the fastening elements (32) and extends in the direction of the welding location (10), and in that the electrode holder (42) is fastened to the end of the arm (39, 49) facing the welding location, the pivoting of the arm permitting a radial adjustment of the electrode distance between the longitudinal axis of the welding apparatus (4) and the electrode tip (43) for adaptation to the diameter of the tube to be welded.

4. Welding apparatus according to one of Claims 1 to 3, characterized in that a feed device (19) for feeding a welding wire (21) to the welding location (10) is firmly connected to the insert (25), and an additional drive motor (61) for the feed device (19) is fastened in the insert (25).

5. Welding apparatus according to Claim 4, characterized in that the feed device (19) carries a reel (20) for the welding wire (21).

## Revendications

1. Appareil de soudage pour souder des tubes (2) dans des parois, notamment dans des plaques tubulaires, comportant un boîtier fixe (13), dans lequel est logé un ensemble amovible (25) qui peut pivoter autour de l'axe longitudinal de l'appareil de soudage (4), celui-ci portant à son extrémité en regard de l'endroit à souder un porte-électrode (42,66) adapté à recevoir une électrode (30) mobile suivant un trajet sensiblement circulaire, l'appareil de soudage pouvant être raccordé directement à un système de régulation et d'alimentation (6) par des canalisations (26-29) branchées à poste fixe sur l'extrémité de l'ensemble tournant opposée à l'endroit du soudage, ces canalisations servant au passage de signaux qui commandent la rotation de l'ensemble (25) dans le boîtier (13) et assurant l'alimentation nécessaire à l'opération de soudage, caractérisé en ce que l'ensemble (25) comporte une monture en forme de cage (31) portée dans le boîtier (13) par des paliers à roulement (35) et pourvue de deux éléments de fixation (32, 33) situés l'un derrière l'autre dans le sens axial, ces éléments étant rigidement associés l'un à l'autre par des tiges (34) disposées dans le sens axial, et un moteur d'entraînement (36) monté à poste fixe dans la cage (31) pour assurer le mouvement de l'ensemble tournant.

2. Appareil de soudage selon la revendication 1, caractérisé en ce que le moteur d'entraînement (36) est pourvu d'un pignon (37) qui est en prise avec une couronne à denture interne (38) disposée dans le boîtier (13).

3. Appareil de soudage selon la revendication 1 ou 2, caractérisé en ce qu'il comporte un bras articulé (39, 49) qui est monté sur l'un des éléments de fixation (32) et qui s'étend en direction de l'endroit à souder (10), et en ce que le porte-électrode (42) est fixé à l'extrémité du bras (39, 49) qui se trouve en regard de l'endroit à souder, le mouvement du bras articulé permettant un réglage radial de l'écartement de l'électrode entre l'axe longitudinal de l'appareil de soudage (4) et la pointe de l'électrode (43), pour assurer une adaptation au diamètre du tube à fixer par soudage.

4. Appareil de soudage selon l'une des revendications 1 à 3, caractérisé en ce qu'il comporte un système d'avance (19) rigidement fixé à l'ensemble tournant (25) pour assurer le mouvement d'un fil de soudage (21) jusqu'à l'endroit du soudage (10), et un moteur d'entraînement supplémentaire (61) fixé à l'ensemble tournant (25) pour commander le système d'avance (19).

5. Appareil de soudage selon la revendication 4, caractérisé en ce que le système d'avance (19) porte

**EP 0 222 716 B1**

une bobine (20) pour le fil de soudage (21).

Fig.1

Fig. 2

Fig.3

Fig.5

Fig.4

Fig.6

Fig.7